# EUROPEAN PATENT APPLICATION

(11) **EP 3 193 526 A1**
(43) Date of publication of application: **19.07.2017**
(21) Application number: 17152813.6
(22) Date of filing: 11.11.2011
(51) Int. Cl.: H04W 24/08, H04W 24/10, H04L 5/00

(54) **METHODS FOR CONFIGURING CHANNEL STATE INFORMATION MEASUREMENT IN A COMMUNICATIONS SYSTEM AND COMMUNICATIONS APPARATUSES UTILIZING THE SAME**

(30) Priority: 11.11.2010 US 412538 P; 10.01.2011 US 201161431310 P
(62) Divisional of application: 11840069.6
(71) Applicant: MediaTek Inc., Hsin-Chu 300 (TW)
(72) Inventor: HWANG, Chien-Hwa, 302 Zhubei City, Hsinchu County (TW); WU, Ciou-Ping, 261 Toucheng Township, Yilan County (TW); Chen, Yih-Shen, 300 Hsinchu City (TW)
(74) Representative: 2K Patentanwälte Blasberg Kewitz & Reichel

(57) **Abstract**

A communications apparatus is provided. A controller determines two different sub-frame subsets for configuring an user equipment, UE, to perform channel state information measurement according to time-domain variation of a level of interference of the UE obtained from one or more previous measurement result(s). A transceiver transmits a configuration message carrying information regarding the two sub-frame subsets to the UE and receives one or more measurement result reporting message(s) carrying information regarding the measurement result(s) from the UE.

## Description

### CROSS REFERENCE TO RELATED APPLICATIONS

This application claims the benefit of U.S. Provisional Application No. 61/412,538 filed 2010/11/11 and entitled "RESTRICTION OF CSI MEASUREMENT" and the benefit of U.S. Provisional Application No. 61/431,310 filed 2011/01/10 and entitled "CSI FEEDBACK BASED ON INTERFERENCE MEASUREMENT IN RESTRICTED SUBSETS OF SUBFRAMES". The entire contents of which are hereby incorporated by reference.

### TECHNICAL FIELD

The invention relates to configuration of channel state information (CSI) measurement in a wireless communications system.

### BACKGROUND

Due to mobile communication technology advancements in recent years, various communications services, such as voice call services, data transfer services, and video call services, etc., may be provided to users regardless of their locations. Most mobile communications systems are multiple access systems in which access and wireless network resources are allocated to multiple users. The multiple access technologies employed by the mobile communications systems include the 1x Code Division Multiple Access 2000 (1x CDMA 2000) technology, the 1x Evolution-Data Optimized (1x EVDO) technology, the Orthogonal Frequency Division Multiplexing (OFDM) technology, and the Long Term Evolution (LTE) technology. Evolved from the LTE technology, the LTE Advanced technology is a major enhancement of the LTE standard. The LTE Advanced technology should be compatible with LTE equipment, and should share frequency bands with the LTE communications system. One of the important LTE Advanced technolgoy benefits is its ability to take advantage of advanced topology networks, wherein optimized heterogeneous networks have a mix of macros with low power nodes such as picocells, femtocells and new relay nodes.

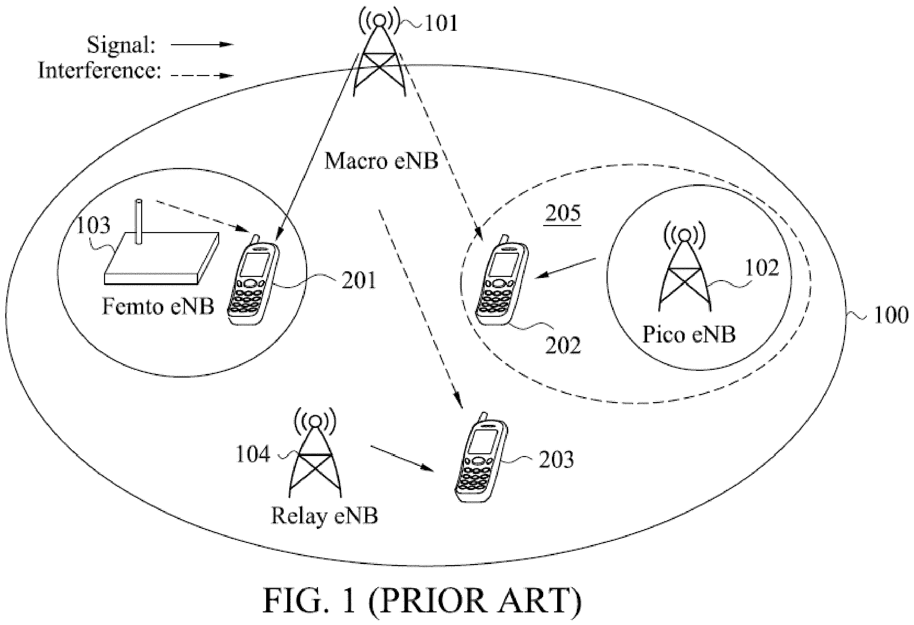

FIG.1 shows an exemplary heterogeneous network (HetNet) deployment. Within the coverage area 100 of a macro evolved node B (eNB) 101, several low power nodes having smaller coverage areas are deployed so as to improve the overall system capacity. As shown in the figure, a pico eNB (also called a picocell) 102, a femto eNB (also called a femtocell) 103 and a relay eNB 104 are deployed with the coverage area 100 of the macro eNB 101. However, such HetNet deployment may cause undesired inter-cell interference. For example, suppose that the user equipment (UE) 202, in the cell range expansion (CRE) region (such as the CRE region 205 shown in FIG. 1) of the pico eNB 102, camps on the pico eNB 102 as a serving cell. Because the power level of the signal received from the pico eNB 102 in the CRE region may be weaker than the power level of the signal received from the macro eNB 101, the signal transmitted by the macro eNB 101 adjacent to the UE 202 may become a strong interference to the UE 202. For another example, when a UE 201 not belong to the closed subscriber group (CSG) of the femto eNB 103 moves to the coverage area thereof, the signal transmitted by the femto eNB 103 may also become a strong interference to the UE 201. For yet another example, the signal transmitted by the macro eNB 101 may also be an interference to the UE 203 when the relay eNB 104 is transmitting signal or data to the UE 203 at the same time.

The inter-cell interference may cause an inaccuracy problem when the UE is performing a channel state information (CSI) measurement in the wireless communications system. In order to solve the above-mentioned problems, methods and apparatus for configuring channel state information measurement in a communications system are provided.

### SUMMARY

Communications apparatuses and methods for configuring channel state information measurement in a communications system are provided. An embodiment of a communications apparatus comprises a controller and a transceiver. The controller determines two different sub-frame subsets for configuring a peer communications apparatus to perform channel state information measurement according to time-domain variation of a level of interference of the peer communications apparatus obtained from one or more previous measurement result(s). The transceiver transmits a configuration message carrying information regarding the two sub-frame subsets to the peer communications apparatus and receives one or more measurement result reporting message(s) carrying information regarding the measurement result(s) from the peer communications apparatus.

Another embodiment of a communications apparatus comprises a controller and a transceiver. The controller obtains information regarding a first sub-frame subset and a second sub-frame subset, performs a first channel state information measurement at the sub-frame(s) comprised in the first sub-frame subset to obtain a first measurement result and performs a second channel state information measurement at the sub-frame(s) comprised in the second sub-frame subset to obtain a second measurement result. The transceiver receives a configuration message carrying information regarding the first and second sub-frame subsets from a peer communications apparatus, transmits a first measurement result reporting message carrying information regarding the first measurement result to the peer communications apparatus and transmits a second measurement result reporting message carrying information regarding the second measurement result to the peer communications apparatus.

An embodiment of a method for configuring channel state information measurement in a communications system comprises: determining a first sub-frame subset and a second sub-frame subset by a communications apparatus; transmitting a configuration message carrying information regarding the first and second sub-frame subsets to a peer communications apparatus by the communications apparatus; performing a first channel state information measurement at the subframe(s) comprised in the first sub-frame subset to obtain a first measurement result by the peer communications apparatus; performing a second channel state information measurement at the subframe(s) comprised in the second sub-frame subset to obtain a second measurement result by the peer communications apparatus; transmitting a first measurement result reporting message carrying information regarding the first measurement result to the communications apparatus by the peer communications apparatus; and transmitting a second measurement result reporting message carrying information regarding the second measurement result to the communications apparatus by the peer communications apparatus.

Another embodiment of a communications apparatus comprises a controller and a transceiver. The controller determines whether a peer communications apparatus is a victim communications apparatus suffering from interference from one or more adjacent network node(s) and determines a configuration for the peer communications apparatus to perform a channel state information measurement. The configuration determined for a victim communications apparatus is different from the configuration determined for a non-victim communications apparatus. The transceiver transmits a configuration message carrying information regarding the configuration to the peer communications apparatus.

Another embodiment of a method for configuring channel state information measurement in a communications system comprises: determining whether a peer communications apparatus is a victim communications apparatus suffering from interference from one or more adjacent network node(s) in the communications system by a communications apparatus; determining a configuration for the peer communications apparatus to perform a channel state information measurement by the communications apparatus, wherein the configuration determined for a victim communications apparatus is different from the configuration determined for a non-victim communications apparatus; and transmitting a configuration message carrying information regarding the configuration to the peer communications apparatus.

A detailed description is given in the following embodiments with reference to the accompanying drawings.

### BRIEF DESCRIPTION OF DRAWINGS

The invention can be more fully understood by reading the subsequent detailed description and examples with references made to the accompanying drawings, wherein:
FIG. 1 shows an exemplary heterogeneous network (HetNet) deployment;
FIG. 2a is a simplified block diagram illustrating a communications apparatus according to an embodiment of the invention;
FIG. 2b is a simplified block diagram illustrating a communications apparatus according to another embodiment of the invention;
FIG. 3a shows an exemplary Macro-Pico deployment according to an embodiment of the invention;
FIG. 3b shows an exemplary ABS pattern of Macro eNB and sub-frame patterns of the subsets S_1 and S_2 configured under the deployment as shown in FIG. 3a;
FIG. 4a shows an exemplary Macro-Femto deployment according to an embodiment of the invention;
FIG. 4b shows an exemplary ABS pattern of Macro eNB, ABS pattern of Femto eNB, and sub-frame patterns of the subsets S_1 and S_2 configured under the deployment as shown in FIG. 4a;
FIG. 5a shows an exemplary Macro-Pico deployment according to another embodiment of the invention;
FIG. 5b shows an exemplary ABS patterns of Macro eNBs and sub-frame patterns of the subsets S_1 and S_2 configured under the deployment as shown in FIG. 5a;
FIG. 6 show a flow chart of a method for configuring channel state information measurement in a communications system according to an embodiment of the invention;
FIG. 7 shows an exemplary CSI-RS sub-frame pattern and an exemplary ABS pattern according to an embodiment of the invention; and
FIG. 8 shows a flow chart of a method for configuring channel state information measurement in a communications system according to another embodiment of the invention.

### DETAILED DESCRIPTION

The following description is of the best-contemplated mode of carrying out the invention. This description is made for the purpose of illustrating the general principles of the invention and should not be taken in a limiting sense. The scope of the invention is best determined by reference to the appended claims.

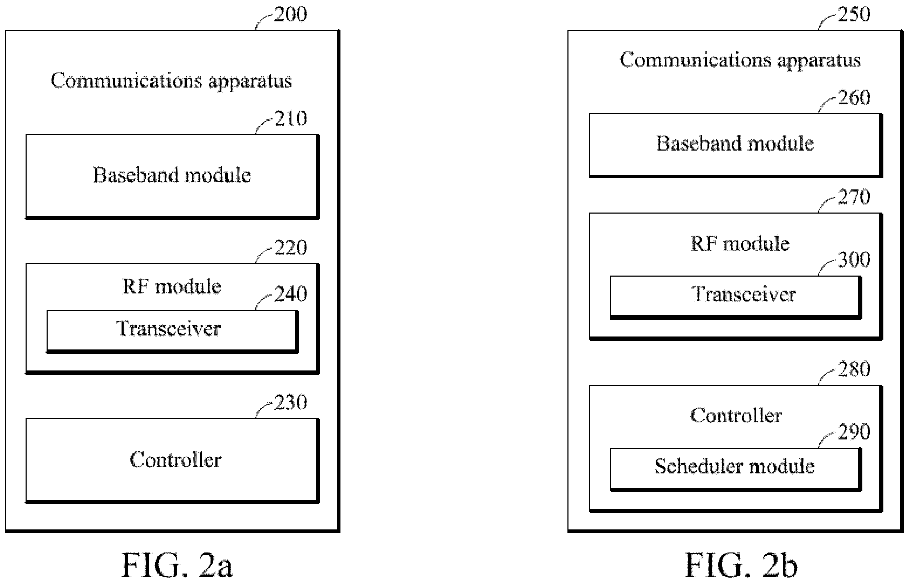

FIG. 2a is a simplified block diagram illustrating a communications apparatus according to an embodiment of the invention. The communications apparatus 200 may be a User Equipment (UE) in the service network as shown in FIG. 1. The operations of the service network may be in compliance with a communication protocol. In one embodiment, the service network may be a Long Term Evolution (LTE) system or an LTE Advanced system. The communications apparatus 200 may comprise at least a baseband module 210, a Radio Frequency (RF) module 220 and a controller 230. The baseband module 210 may comprise multiple hardware devices to perform baseband signal processing, including Analog to Digital Conversion (ADC)/Digital to Analog Conversion (DAC), gain adjusting, modulation/demodulation, encoding/decoding, and so on. The RF module 220 may receive RF wireless signals, convert the received RF wireless signals to baseband signals, which are processed by the baseband module 210, or receive baseband signals from the baseband module 210 and convert the received baseband signals to RF wireless signals, which are later transmitted. The RF module 220 may also comprise multiple hardware devices to perform signal transceiving and radio frequency conversion. For example, the RF module 220 may comprise a transceiver 240 for transceiving RF wireless signals and a mixer (not shown) to multiply the baseband signals with a carrier oscillated in the radio frequency of the wireless communications system, wherein the radio frequency may be 900MHz, 1900MHz, or 2100MHz utilized in Universal Mobile Telecommunications System (UMTS) systems, or may be 900MHz, 2100MHz, or 2.6GHz utilized in the LTE systems, or others depending on the radio access technology (RAT) in use. The controller 230 controls the operation of the baseband module 210 and RF module 220 and other functional components, such as a display unit and/or keypad serving as the MMI (man-machine interface), a storage unit storing data and program codes of applications or communication protocols, or others. In addition to the UMTS system and the LTE system, it is to be understood that the invention may be applied to any future RATs.

FIG. 2b is a simplified block diagram illustrating a communications apparatus according to another embodiment of the invention. The communications apparatus 250 may be an evolved node B (eNB) in the service network as shown in FIG. 1. The communications apparatus 250 may comprise at least a baseband module 260, an RF module 270 and a controller 280. The RF module 270 may transmit and receive signals via wireless or wired manner. Note that according to the embodiment of the invention, the eNB may transmit control or/and data signal(s) to one or more UEs and communicate with other eNBs via wireless or wired connection. For example, the RF module 270 may comprise a transceiver 300 for transceiving RF wireless signals and a mixer (not shown) to multiply the baseband signals with a carrier oscillated in the radio frequency of the wireless communications system. In some embodiments, the communications apparatus 250 may communicate with other eNBs via backhaul connection. The operations of the baseband module 260, RF module 270 and the controller 280 are similar to that of the baseband module 210, RF module 220 and the controller 230 as shown in FIG. 2a. Therefore, for the detailed descriptions of the baseband module 260, RF module 270 and the controller 280 reference may be made to the baseband module 210, RF module 220 and the controller 230 as described above, and are omitted here for brevity. Note that according to the embodiment of the invention, because the eNB is responsible for serving one or more UEs in the serving network, the controller 280 may further schedule control signal and data transmissions for transmitting control signals and data to the UE(s) in the serving network. For example, the controller 280 may comprise a scheduler module 290, which is arranged to schedule the signal and data transmissions. Note that in some embodiments, the transmission scheduling may be directly performed by the controller 280. Therefore, a dedicated scheduler module 290 may an optional choice based on different design requirements, and the invention should not be limited what is shown in FIG. 2b. Note also that the controller 230/280 may also be integrated into the baseband module 210/260, depending on different design requirements, and the invention should not be limited to that shown in FIG. 2a and FIG. 2b.

Referring back to FIG. 1, as previously described, the signal transmitted by the macro eNB 101 adjacent to the UE 202 may become a strong interference to the UE 202 when the UE 202 is located in the CRE region 205 of a pico eNB 102. In this case, the macro eNB 101 may be regarded as an aggressor eNB, the UE 202 may be regarded as a victim UE and the pico eNB 102 may be regarded as a victim eNB since the downlink signal transmitted by the pico eNB 102 may be interfered with by the downlink signal transmitted by the macro eNB 101. Similarly, for the case when the downlink signal transmitted by the femto eNB 103 interferes with the downlink signal transmitted by the macro eNB 101, the femto eNB 103 may be regarded as an aggressor eNB, the UE 201 may be regarded as a victim UE and the macro eNB 101 may be regarded as a victim eNB. In the following paragraphs, methods and an apparatus for configuring channel state information (CSI) measurement in a communications system for the Macro-Pico and Macro-Femto deployments will be further illustrated.

Generally, the CSI measurement is performed by measuring power of the Common Reference Signal (CRS) or the Channel State Information Reference Signal (CSI-RS) to obtain channel state information. As defined in the specification, for transmission modes 1 to 8, the CRS is used for CSI measurement and for transmission mode 9, the CSI-RS or the CRS plus CSI-RS is/are used for CSI measurement. However, because inter-cell interference may cause an inaccuracy problem when the UE is performing channel state information (CSI) measurement, the measurement configurations for the victim UE under the Macro-Pico and Macro-Femto deployments are preferably to be of specially concern.

When a muting scheme is activated from the network side, the (aggressor) eNB may mute in the resource elements (REs) for signal or data transmission when the resource elements collide with the resource elements utilized by the adjacent (victim) eNB's for CRS or CSI-RS transmission. In other words, the (aggressor) eNB may not use the collided resource element for signal or data transmission. Therefore, the UE may perform CSI measurement in any sub-frame. However, when the muting scheme is not activated or configured by the network, it is preferable to restrict the CSI measurement in some resource elements having less interference for a victim UE. In other words, when the muting scheme is not activated or configured, the victim UE and the non-victim UE may have different configurations in the sub-frames for CSI measurements. Here, the victim UE may refer to the UE in the CRE region under the Macro-Pico deployment or the UE suffering inference from an adjacent femto eNB under the Macro-Femto deployment, and the non-victim UE may refer to the UE in the non-CRE region under the Macro-Pico deployment or the UE not suffering inference from an adjacent femto eNB under the Macro-Femto deployment.

Since it is preferable to restrict the CSI measurement in some resource elements having less interference for a victim UE, the distribution(s) of one or more almost blank sub-frame(s) of one or more adjacent network node(s) (that is, the adjacent eNBs which may cause inter-cell interference) may be taken into consideration when determining the measurement configurations for the UEs.

Generally, one frame may comprise 10 sub-frames, and one sub-frame has a duration of 1ms and comprises 14 OFDM symbols. The sub-frame blanked by the eNB (which may be an aggressor eNB) is called an almost blank sub-frame (ABS). In the ABS, the eNB may not schedule data transmission, and only schedule fewer control signal transmissions than in a normal sub-frame. Because data transmission is not scheduled in the ABS, the control signals to be transmitted in the ABS can be fewer than that transmitted in a normal sub-frame. For example, in the ABS, the Physical Control Format Indicator Channel (PCFICH) control signals and Physical Downlink Control Channel (PDCCH) control signals are not transmitted, where the PCFICH control signal is utilized to specify how many OFDM symbols are used to transmit the control channels so that the receiver UE knows where to find control information, and the PDCCH control signal is utilized to specify resource allocation and modulation and coding scheme of the data signals (to be transmitted in the data region). The control signals that are still transmitted in the control region of an ABS may comprise, for example and are not limited to, the common control signals (such as the Common Reference Signal (CRS), synchronization signal, system information... etc.) and paging signal.

According to a concept of the invention, the eNB may configure zero or two sub-frame subsets for the UE to perform CSI measurement. For example, the controller (such as the controller 280) of the eNB may determine two different sub-frame subsets for configuring a UE (which is, from the eNB's aspect, a peer communications apparatus) to perform CSI measurement according to time-domain variation of a level of interference of the UE and generate one or more configuration message(s) carrying information regarding the two sub-frame subsets. The transceiver (such as the transceiver 300) of the eNB may transmit the configuration message(s) to the UE, and may further receive one or more measurement result reporting message(s) carrying information regarding one or more measurement result(s) from the UE. Based on the measurement result(s), the controller (or the scheduler module) of the eNB may schedule signal and/or data transmissions of the UE with the least interference.

According to an embodiment of the invention, the controller of the eNB may determine the two sub-frame subsets from a set of sub-frames according to time-domain variation of a level of interference of the UE obtained from one or more previous measurement result(s), or may further according to distribution(s) of one or more ABS(s) of one or more adjacent network node(s) (that is, the adjacent eNBs which may cause inter-cell interference). Assume the set of the sub-frames are denoted as S and the two sub-frame subsets as S_1 and S_2, where both the sub-frame subsets S_1 and S_2 may be a subset of S. For example, the set of the sub-frames S may comprise a plurality of successive sub-frames over a time period (for example, 40ms) and may be represented as S={S₀, S₁, S₂, ... S₃₉}, where Si represents one sub-frame. The sub-frame subsets S_1 and S_2 may both be a subset of S. For example, the sub-frame subsets S_1 and S_2 may be represented as S_1={Sᵢ, i=1+8k, k=0, 1...4} and S_1={Sᵢ∪Sⱼ, i=3+8k, j=5+8k, k=0, 1...4}, where ∪ means a union of two sets.

According to an embodiment of the invention, the controller of the eNB may design the sub-frame subsets S_1 and S_2 to be complementary to each other. That is, intersection of the sub-frame subsets S_1 and S_2 is an empty set. According to another embodiment of the invention, the controller of the eNB may also design the sub-frame subsets S_1 and S_2 to not be complementary to each other. That is, intersection of the sub-frame subsets S_1 and S_2 is not an empty set. In addition, the controller of the eNB may further design the union of the sub-frame subsets S_1 and S_2 to be exactly the set of sub-frames S, or to be less than the set of sub-frames S. Different configurations may be suitable for different network deployments and may carry out different measurement results, and the eNB may further obtain some important information (for example, the location information) from the measurement results. In the following paragraphs, three scenarios with three different measurement configurations are illustrated.

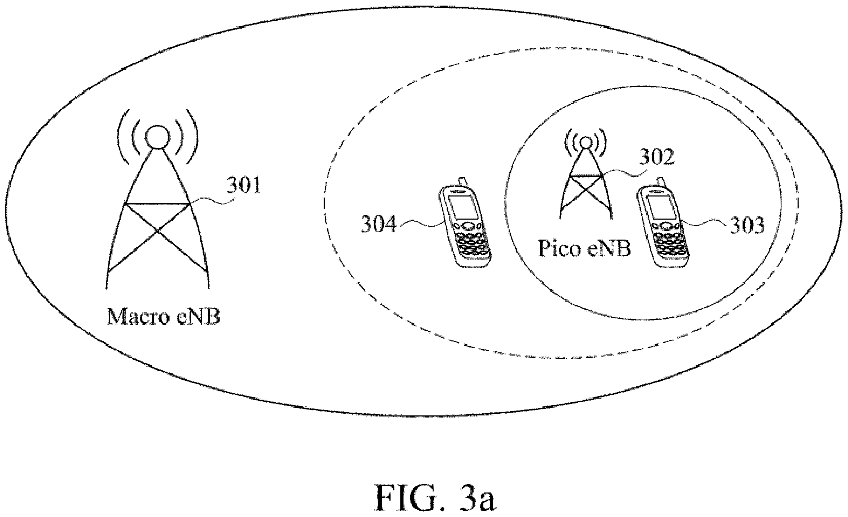

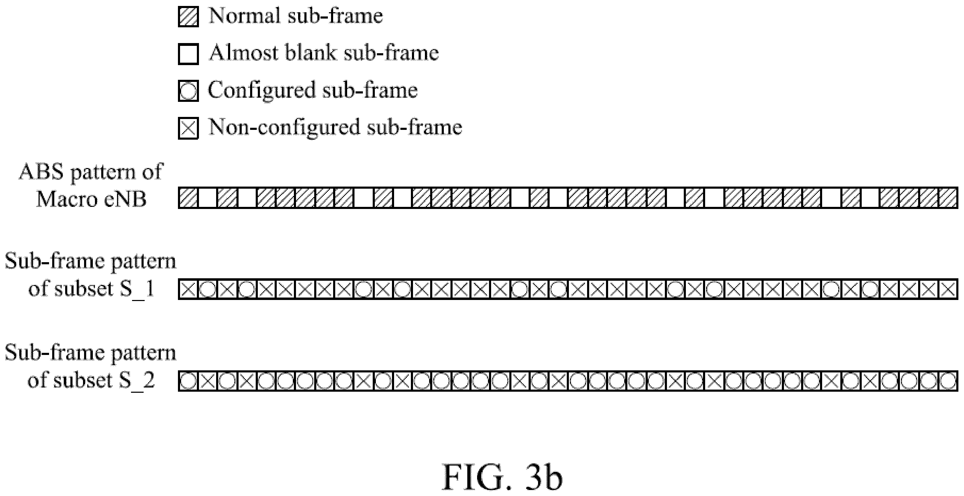

FIG. 3a shows an exemplary Macro-Pico deployment according to an embodiment of the invention, and FIG. 3b shows an exemplary ABS pattern of Macro eNB and sub-frame patterns of the subsets S_1 and S_2 configured under the deployment as shown in FIG. 3a. In the scenario shown in FIG. 3a, the UE 303 is located in the CRE region of the pico eNB 302, and the UE 304 is located in the non-CRE region of the pico eNB 302. Suppose that the UE 303 and UE 304 are configured with two sub-frame subsets S_1 and S_2 as shown in FIG. 3b. It can be seen from FIG. 3b that the first sub-frame subset S_1 and the second sub-frame subset S_2 are complementary to each other, where the first sub-frame subset S_1 comprises the sub-frames over a time period and colliding the ABS of macro eNB 301 and the second sub-frame subset S_2 comprises the subframes over the time period and colliding the normal sub-frame of macro eNB 301.

Because the UE 303 is located in the CRE region of the pico eNB 302, the UE 303 would possibly report a measurement result with a relatively higher Channel Quality Index (CQI) for the sub-frame subset S_1 than the sub-frame subset S_2. On the contrary, the UE 304 located in the non-CRE region of the pico eNB 302 would possibly report a measurement result for the sub-frame subset S_1 with roughly the same CQI as the measurement result for the sub-frame subset S_2. Based on the measurement results reported by the UE 303 and UE 304, the pico eNB 302 may obtain a rough idea about the relative location of the UE 303 and UE 304 with respect to the macro eNB 301, and may respectively schedule signal and/or data transmissions of the UE 303 and UE 304 in suitable sub-frames. For example, the pico eNB 302 may schedule the signal and/or data transmissions of the UE 303 in the ABS of macro eNB 301 and may schedule the signal and/or data transmissions of the UE 304 in any sub-frame.

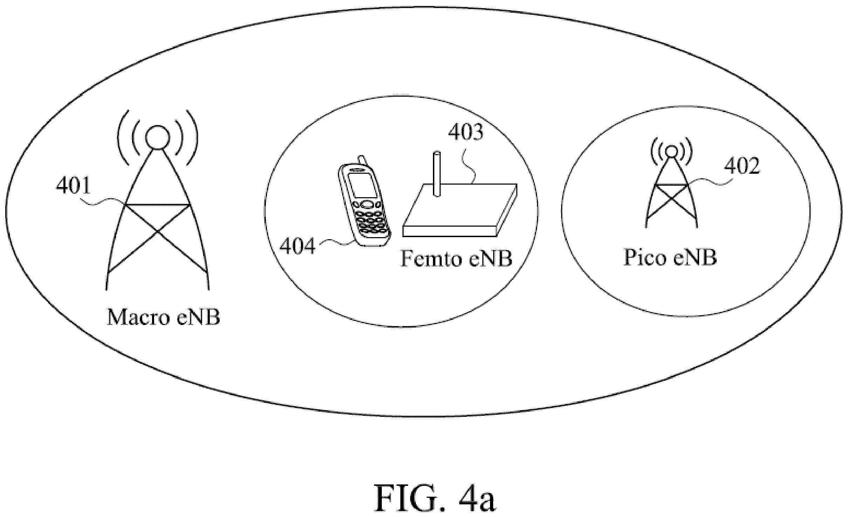

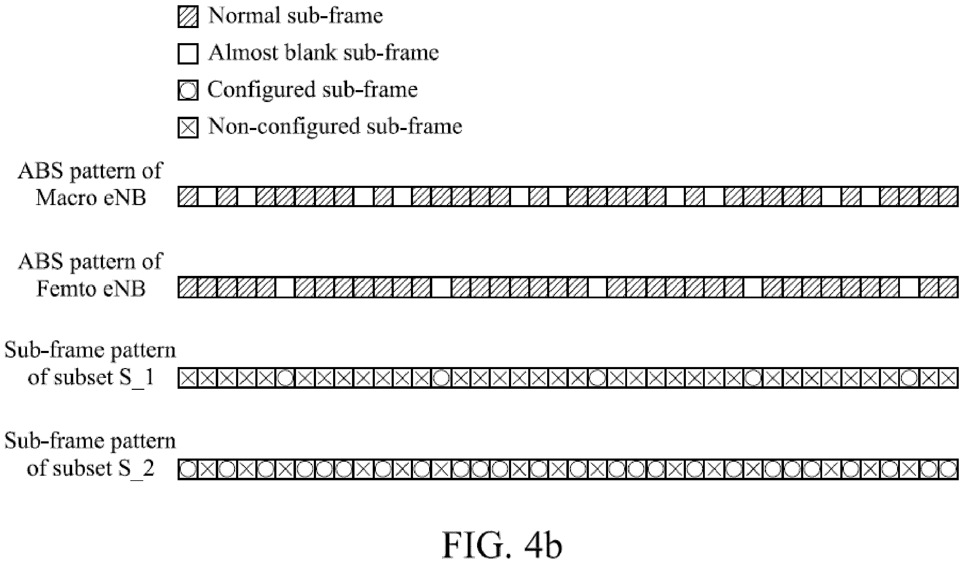

FIG. 4a shows an exemplary Macro-Femto deployment according to an embodiment of the invention, and FIG. 4b shows an exemplary ABS pattern of a Macro eNB, an ABS pattern of a Femto eNB, and sub-frame patterns of the subsets S_1 and S_2 configured under the deployment as shown in FIG. 4a. In the scenario shown in FIG. 4a, the UE 404 camping on the macro eNB 401 does not belong to the closed subscriber group (CSG) of the femto eNB 403, and has moved to the coverage area of the femto eNB 403. In addition, there is another pico eNB 402 deployed close to the macro eNB 401 and femto eNB 403. In order to protect the UE located in the CRE region of the pico eNB 402, the signal and/or data transmissions of the UE 404 are preferably to be scheduled in the normal sub-frames of the macro eNB 401. In addition, in order to protect the UE 404 that is close to the femto eNB 403 to not be interfered with by the femto eNB 403, the signal and/or data transmissions of the UE 404 are preferably to be scheduled in the ABSs of the femto eNB 403. Therefore, as shown in FIG. 4b, the first sub-frame subset S_1 comprises the sub-frames over a time period and belongs to the intersection of the normal sub-frames of macro eNB 401 and the ABSs of the femto eNB 403, and second sub-frame subset S_2 comprises the sub-frames over the time period and belongs to the intersection of the normal sub-frames of macro eNB 401 and the normal sub-frames of the femto eNB 403.

Because the UE 404 is located in the coverage area of the femto eNB 403, the UE 404 would possibly report a measurement result with a relatively higher CQI for the sub-frame subset S_1 than the sub-frame subset S_2. Based on the measurement results reported by the UE 404, the macro eNB 401 may obtain a rough idea about the relative location of the UE 404 with respect to the femto eNB 403 , and may schedule signal and/or data transmissions of the UE 404 in suitable subframes (for example, the ABS of the femto eNB 403). Once the UE 404 has moved out from the coverage area of the femto eNB 403 or the femto eNB 403 has entered the idle mode (due to the UE served by the femto eNB 403 has entered the idle mode), the macro eNB 401 may be aware of this situation because the UE 404 would possibly report a measurement result for the sub-frame subset S_1 with roughly the same CQI as the measurement result for the sub-frame subset S_2. In this manner, the macro eNB 401 may further schedule the signal and/or data transmissions of the UE 404 in some sub-frames other than the ABS of the femto eNB 403 so as to increase the transmission throughput of the UE 404.

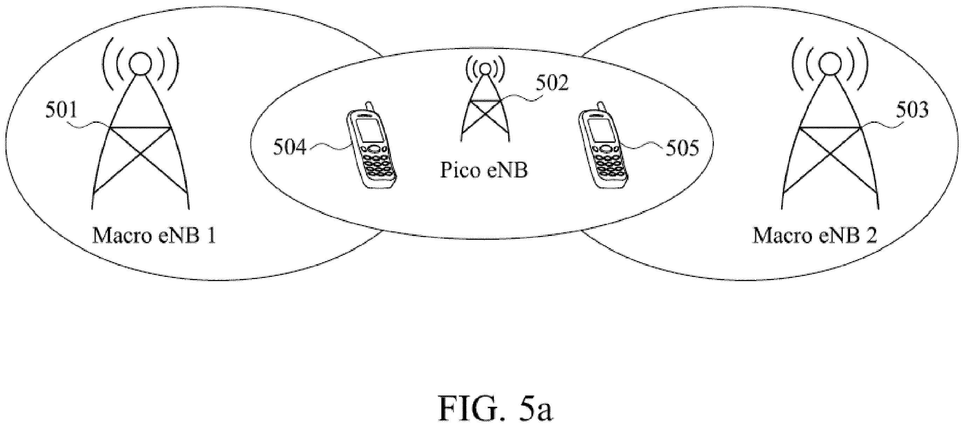

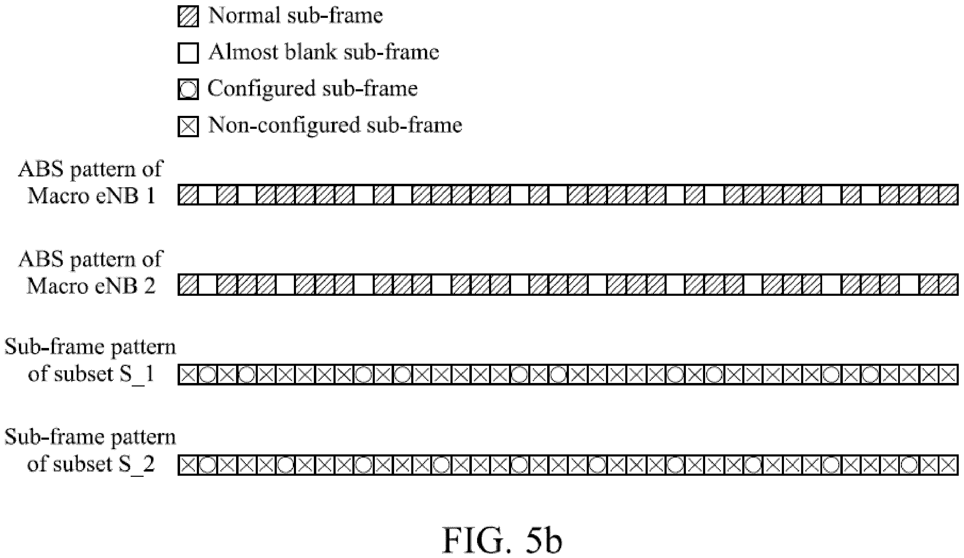

FIG. 5a shows an exemplary Macro-Pico deployment according to another embodiment of the invention, and FIG. 5b shows an exemplary ABS patterns of Macro eNBs and sub-frame patterns of the subsets S_1 and S_2 configured under the deployment as shown in FIG. 5a. In the scenario shown in FIG. 5a, the UE 504 and the UE 505 are both located in the CRE region of the pico eNB 502 and camp on the pico eNB 502. The UE 504 is close to the macro eNB 501 and the UE 505 is close to the macro eNB 503. Suppose that the UE 504 and UE 505 are configured with two sub-frame subsets S_1 and S_2 as shown in FIG. 5b. It can be seen from FIG. 5b that the first sub-frame subset S_1 comprises the sub-frames over a time period and colliding the ABS of macro eNB 501 and the second sub-frame subset S_2 comprises the sub-frames over the time period and colliding the ABS of macro eNB 503.

Because the UE 504 is close to the macro eNB 501, the UE 504 would possibly report a measurement result with a relatively higher CQI for the sub-frame subset S_1 than the sub-frame subset S_2. On the contrary, the UE 505 close to the macro eNB 503 would possibly report a measurement result with a relatively higher CQI for the sub-frame subset S_2 than the sub-frame subset S_1. Based on the measurement results reported by the UE 504 and UE 505, the pico eNB 502 may obtain a rough idea about the relative location of the UE 504 and UE 505 with respect to the macro eNB 501 and the macro eNB 503, and may respectively schedule signal and/or data transmissions of the UE504 and UE 505 in suitable sub-frames. For example, the pico eNB 502 may schedule the signal and/or data transmissions of the UE 504 in the ABS of macro eNB 501 and may schedule the signal and/or data transmissions of the UE 505 in the ABS of macro eNB 503.

Regarding the fact that the UE that has to perform the CSI measurement in response to the measurement configuration configured by the eNB, the transceiver (such as the transceiver 240) of the UE may first receive one or more configuration message(s) carrying information regarding the measurement configuration(s) from the eNB (which is, from the UE's aspect, a peer communications apparatus), and the controller (such as the controller 230) of the UE may obtain information regarding the two sub-frame subsets from the configuration message(s). The controller (such as the controller 230) of the UE may further perform CSI measurement at the sub-frame(s) comprised in different sub-frame subsets to obtain different measurement results, and generate one or more measurement result reporting message(s) carrying the measurement result(s). The transceiver (such as the transceiver 240) of the UE may further transmit the measurement result reporting message(s) to the eNB.

According to an embodiment of the invention, the measurement results obtained based on different sub-frame subsets may be respectively reported to the eNB at the time either explicitly assigned by the eNB or implicitly determined by a predefined rule known to both the eNB and the UE, so that the eNB may know which sub-frame subset configuration is associated with the currently received measurement result. Once the eNB receives the measurement result(s), the eNB may have an idea about which sub-frame(s) is/are suitable for the signal and/or data transmissions of the UE. Therefore, the eNB may schedule signal and/or data transmissions of the UE according to the measurement result(s). In addition, the eNB may further obtain some important information (such as the location information as described above) from the measurement result(s).

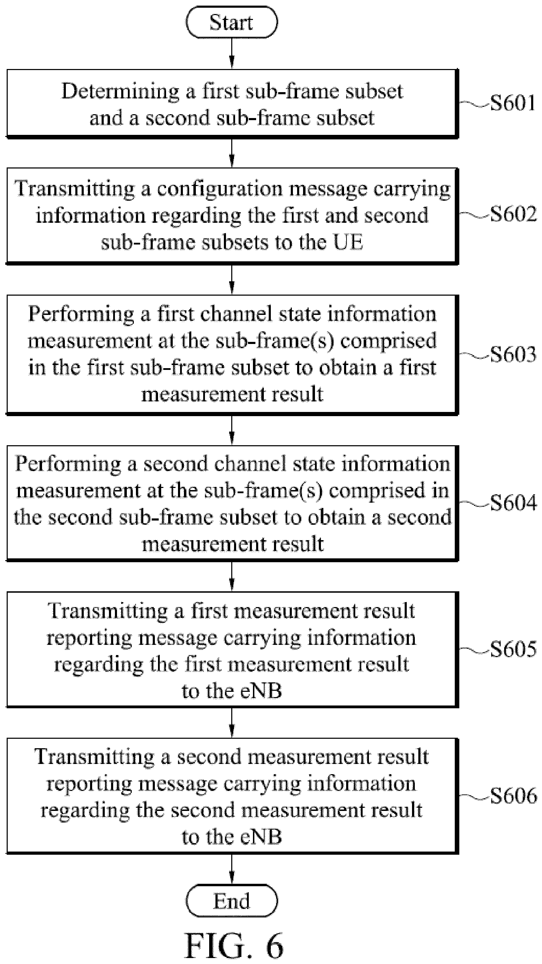

FIG. 6 show a flow chart of a method for configuring channel state information measurement in a communications system according to an embodiment of the invention. The eNB may first determine a first sub-frame subset and a second sub-frame subset (Step S601). As previously described, the first and second sub-frame subsets may be determined according to distribution(s) of one or more ABS(s) of one or more network node(s), which is/are adjacent to the UE in the communications system. Next, the eNB may transmit a configuration message carrying information regarding the first and second sub-frame subsets to the UE (Step S602). Next, upon receiving the configuration message, the UE may perform a first channel state information measurement at the sub-frame(s) comprised in the first sub-frame subset to obtain a first measurement result (step S603) and perform a second channel state information measurement at the sub-frame(s) comprised in the second sub-frame subset to obtain a second measurement result (step S604). Finally, the UE may transmit a first measurement result reporting message carrying information regarding the first measurement result to the eNB (Step S605) and transmit a second measurement result reporting message carrying information regarding the second measurement result to the eNB (Step S606). As previously described, the eNB may explicitly assign the time or the UE may implicitly determine the time according to a predefined rule known to both the eNB and the UE for the UE to transmit the first and the second measurement result reporting messages. Once the eNB receives the measurement result(s), the eNB may schedule signal and/or data transmissions of the UE according to the measurement result(s). In addition, the eNB may further obtain some important information (such as the location information as described above) from the measurement result(s).

As previously described, CSI measurement is generally performed by measuring power of the Common Reference Signal (CRS) or the Channel State Information Reference Signal (CSI-RS) to obtain channel state information. The CRS is transmitted in every sub-frame, including the almost blank sub-frame (ABS), but the CSI-RS is not. For transmission modes 1 to 8, the CRS is used for CSI measurement and for transmission mode 9, the CSI-RS or the CRS plus CSI-RS is/are for CSI measurement. In addition, as previously described, when the muting scheme is not activated, it is preferable to restrict the CSI measurement in some resource elements having less interference for a victim UE. For example, when determining the measurement configurations for the UEs, the ABS pattern(s) that describes the distribution(s) of one or more ABS(s) of one or more adjacent network node(s) is/are preferably to be taken into consideration. For these reasons, the design of period of the CSI-RS is preferably, to take the ABS pattern into consideration.

Because the ABS pattern is arranged according to the Hybrid Automatic Repeat Request (HARQ) round trip time (RTT) of a victim communications apparatus, it is also preferably to take the HARQ RTT into consideration when determining the period of the CSI-RS. According to an embodiment of the invention, because the HARQ RTT in a frequency division duplex (FDD) mode (that is, the uplink and downlink data are transmitted in different frequency bands in an FDD manner) is 8 sub-frames, it is preferable to design the period of the CSI-RS as 4ms. Therefore, the controller (such as the controller 280) of the eNB may schedule transmissions of the CSI-RS for the UE to perform the CSI measurement every 4ms.

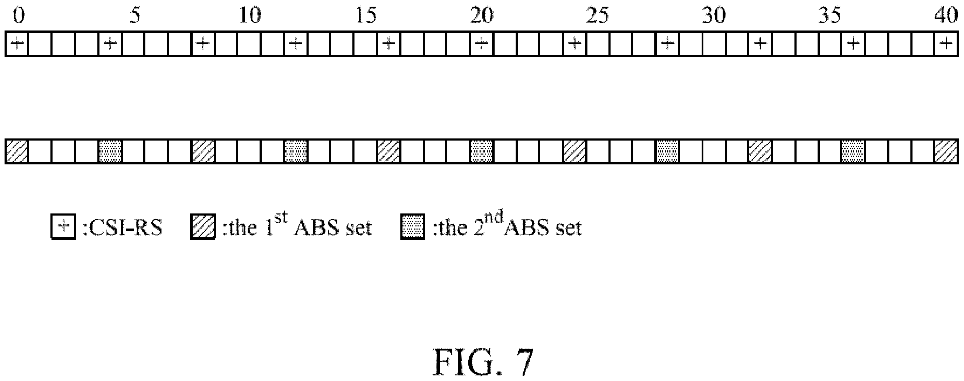

FIG. 7 shows an exemplary CSI-RS sub-frame pattern and an exemplary ABS pattern according to an embodiment of the invention. In this example, it is supposed that the transmission mode is configured to transmission mode 9 in FDD, and the muting scheme has not been activated. As shown in FIG. 7, the period of the CSI-RS is 4 sub-frames (i.e. 4ms) and an ABS set is composed of a series of consecutive sub-frames with a distance of 8ms. When only one ABS set is employed, half of the sub-frames containing the CSI-RS coincide with an ABS. When two ABS sets are employed, every sub-frame containing the CSI-RS coincides with an ABS. Therefore, in this example, a period of 4ms may achieve high granularity of the CSI-RS coinciding with an ABS. However, when the muting scheme is not activated and the period of the CSI-RS is not configured to 4ms (for example, the period of the CSI-RS may be configured to 5ms, 10ms or 20ms as defined by the specification), because the coincidence of a sub-frame containing the CSI-RS and an ABS becomes less frequent, it would be difficult for a UE to perform CSI measurement in transmission mode 9.

To solve this problem, according to another concept of the invention, the eNB may not configure the transmission mode 9 for a victim UE. In other words, the victim UE may only use the CSI to perform the channel state information measurement. Therefore, there is no need to consider the CSI-RS transmission period from the perspective of the ABS pattern. Here, the victim UE may refer to the UE in the CRE region under the Macro-Pico deployment or the UE suffering inference from an adjacent femto eNB under the Macro-Femto deployment, and the non-victim UE may refer to the UE in the non-CRE region under the Macro-Pico deployment or the UE not suffering inference from an adjacent femto eNB under the Macro-Femto deployment.

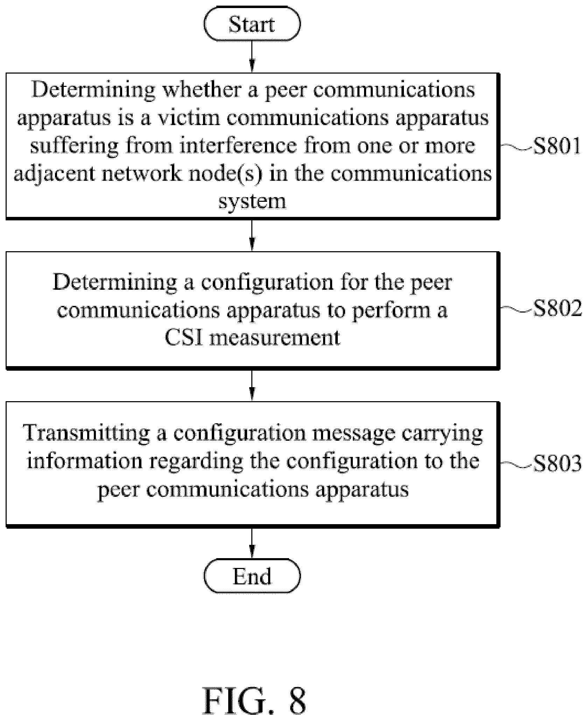

FIG. 8 shows a flow chart of a method for configuring channel state information measurement in a communications system according to another embodiment of the invention. The controller (such as the controller 280) of an eNB may first determine whether a peer communications apparatus (that is, a UE) is a victim communications apparatus suffering from interference from one or more adjacent network node(s) in the communications system (Step S801), and determine a configuration for the peer communications apparatus to perform a CSI measurement (Step S802). Note that according to an embodiment of the invention, the configuration determined for a victim communications apparatus may be different from the configuration determined for a non-victim communications apparatus. For example, the non-victim communications apparatus may be configured to perform CSI measurement in any sub-frame, while the victim communications apparatus may be configured to perform CSI measurement in the ABS(s). Finally, the transceiver (such as the transceiver 300) of the eNB may transmit a configuration message carrying information regarding the configuration to the peer communications apparatus (Step S803).

As previously described, when the muting scheme is not activated and the period of the CSI-RS is not configured to 4ms, once the UE is determined as being a victim UE, the configuration determined for the UE may be that only the CRS is used to perform the CSI measurement. Therefore, the eNB may configure a transmission mode, other than the transmission mode 9, for the UE so that the UE does not use the CSI-RS to perform the CSI measurement. In this manner, the CSI measurement may be performed more frequently so as to obtain the measurement result as fast as possible. In addition, since the ABS may still carry the CRS as previously described, a UE may always use the CRS to perform CSI measurement regardless of which transmission mode is configured. Therefore, according to yet another concept of the invention, there is no need for the eNB to transmit the CSI-RS in the ABS. In other words, when the CSI-RS coincides with an ABS, the eNB may not transmit the CSI-RS in the ABS.

Use of ordinal terms such as "first", "second", "third", etc., in the claims to modify a claim element does not by itself connote any priority, precedence, or order of one claim element over another or the temporal order in which acts of a method are performed, but are used merely as labels to distinguish one claim element having a certain name from another element having a same name (but for use of the ordinal term) to distinguish the claim elements.

While the invention has been described by way of example and in terms of preferred embodiment, it is to be understood that the invention is not limited thereto. Those who are skilled in this technology can still make various alterations and modifications without departing from the scope and spirit of this invention. Therefore, the scope of the present invention shall be defined and protected by the following claims and their equivalents.

## Claims

1. A communications apparatus, comprising:
a controller, determining two different sub-frame subsets for configuring user equipment, UE, to perform channel state information measurement according to time-domain variation of a level of interference of the UE obtained from one or more previous measurement result(s); and
a transceiver, transmitting a configuration message carrying information regarding the two sub-frame subsets to the UE and receiving one or more measurement result reporting message(s) carrying information regarding the measurement result(s) from the UE.

2. The communications apparatus as claimed in claim 1, wherein the controller further determines relative location with respect to adjacent network node(s) of the UE according to the measurement result(s).

3. The communications apparatus as claimed in claim 1, wherein the controller determines the two sub-frame subsets further according to distribution(s) of one or more almost blank sub-frame(s) of one or more adjacent network node(s).

4. A communications apparatus, comprising:
a controller, obtaining information regarding a first sub-frame subset and a second sub-frame subset, performing a first channel state information measurement at the sub-frame(s) comprised in the first sub-frame subset to obtain a first measurement result and performing a second channel state information measurement at the sub-frame(s) comprised in the second sub-frame subset to obtain a second measurement result, wherein the first sub-frame subset and the second sub-frame subset are determined according to time-domain variation of a level of interference of the communications apparatus obtained by an evolved node B, eNB, from one or more previous measurement result(s); and
a transceiver, receiving a configuration message carrying information regarding the first and second sub-frame subsets from the eNB, transmitting a first measurement result reporting message carrying information regarding the first measurement result to the eNB and transmitting a second measurement result reporting message carrying information regarding the second measurement result to the eNB.

5. The communications apparatus as claimed in claim 4, wherein the first and the second measurement result reporting messages are respectively transmitted at the time either explicitly assigned by the eNB or implicitly determined by a predefined rule known to both the communications apparatus and the eNB.

6. The communications apparatus as claimed in claim 4, wherein the first and second sub-frame subsets comprise information regarding one or more almost blank sub-frame(s) of one or more adjacent network node(s).

7. A method for configuring channel state information measurement in a communications system, comprising:
determining a first sub-frame subset and a second sub-frame subset by a communications apparatus according to time-domain variation of a level of interference of an user equipment, UE, obtained from one or more previous measurement result(s);
transmitting a configuration message carrying information regarding the first and second sub-frame subsets to the UE by the communications apparatus;
performing a first channel state information measurement at the sub-frame(s) comprised in the first sub-frame subset to obtain a first measurement result by the UE;
performing a second channel state information measurement at the sub-frame(s) comprised in the second sub-frame subset to obtain a second measurement result by the UE;
transmitting a first measurement result reporting message carrying information regarding the first measurement result to the communications apparatus by the UE; and
transmitting a second measurement result reporting message carrying information regarding the second measurement result to the communications apparatus by the UE.

8. The method as claimed in claim 7, further comprising:
scheduling signal and/or data transmissions of the UE by the communications apparatus according to first and/or second measurement result(s).

9. The method as claimed in claim 7, further comprising:
determining relative location with respect to interfering network node(s) of the UE by the communications apparatus according to the first and/or second measurement result(s).

10. The method as claimed in claim 7, wherein the first and second sub-frame subsets are determined according to distribution(s) of one or more almost blank sub-frame(s) of one or more network node(s), which is/are adjacent to the UE, in the communications system.

11. The method as claimed in claim 7, further comprising:
assigning the time to transmit the first and the second measurement result reporting messages by the communications apparatus.

12. The method as claimed in claim 7, further comprising:
determining the time to transmit the first and the second measurement result reporting messages by a predefined rule known to both the communications apparatus and the UE.

13. The method as claimed in claim 7, wherein the first and second sub-frame subsets are determined from a set of sub-frames and are complementary to each other, or wherein the first and second sub-frame subsets are determined from a set of sub-frames and the union of the first and second sub-frame subsets is the set of sub-frames.

14. The method as claimed in claim 7, wherein the first and second sub-frame subsets are determined from a set of sub-frames and the intersection of the first and second sub-frame subsets is not an empty set.

15. The method as claimed in claim 7, wherein the first and second sub-frame subsets are determined from a set of sub-frames and the union of the first and second sub-frame subsets is less than the set of sub-frames.
